# DEMANDE DE BREVET EUROPEEN

(11) **EP 2 573 348 A1**
(43) Date de publication de la demande: **27.03.2013**
(21) Numéro de dépôt: 12183976.5
(22) Date de dépôt: 12.09.2012
(51) Int. Cl.: F01N 3/20

(54) **Dispositif d'alimentation en reducteur gazeux dans un conduit d'echappement d'un moteur a combustion**

(30) Priorité: 23.09.2011 FR 1158494
(71) Demandeur: PEUGEOT CITROËN AUTOMOBILES SA, 78140 Velizy-Villacoublay (FR)
(72) Inventeur: Ferrand, Nicolas, 78500 Sartrouville (FR); Chapel, Julien, 77380 Combs la Ville (FR)

(57) **Abrégé**

L'invention porte sur un dispositif d'alimentation d'un conduit d'échappement en réducteur gazeux pour la réduction catalytique sélective des oxydes d'azote comportant :
- une portion de conduit d'échappement (1);
- un conduit d'amenée d'un réducteur gazeux dans la portion de conduit d'échappement ;
- un clapet (3) anti-retour installé dans le conduit d'amenée et séparant le conduit d'amenée en une première portion de conduit d'amenée (21) entre le piquage du conduit d'amenée et ledit clapet (3) compris, et une seconde portion de conduit d'amenée (22) au-delà du clapet (3),
- un échangeur (5) thermique, la première portion de conduit d'amenée (21) étant fixée à l'échangeur thermique (5) de sorte à assurer une conductivité thermique entre ladite première portion de conduit d'amenée (21) et l'échangeur (5).

L'invention porte également sur un moteur à combustion équipé d'un tel dispositif et sur un véhicule automobile comportant un tel moteur.

## Description

L'invention porte sur le domaine du traitement des polluants dans les gaz d'échappement des moteurs à combustion, et plus particulièrement de l'architecture des dispositifs permettant un tel traitement.

Les émissions polluantes des moteurs à combustion, notamment des moteurs équipant les véhicules automobiles, sont réglementées par des normes de plus en plus sévères. Les polluants réglementés sont, selon la technologie de moteur à combustion considérée, le monoxyde de carbone (CO), les hydrocarbures imbrûlés (HC), les oxydes d'azotes (NOₓ), et les particules.

Il est connu d'employer un certain nombre de moyens de dépollution dans la ligne d'échappement des moteurs à combustion pour en limiter les émissions de polluants réglementés. Un catalyseur d'oxydation permet le traitement du monoxyde de carbone, des hydrocarbures imbrûlés, et dans certaines conditions des oxydes d'azotes ; un filtre à particules peut être employé pour le traitement des particules de suie.

On désigne de manière générale ces dispositifs par le terme de moyens de « post-traitement » des gaz d'échappement.

Par exemple, pour satisfaire aux normes anti-pollution sur les émissions d'oxydes d'azote (NOₓ), un système spécifique de post-traitement peut être introduit dans la ligne d'échappement des véhicules, notamment des véhicules équipés de moteurs à mélange pauvre, c'est-à-dire du type diesel ou à allumage commandé fonctionnant avec un mélange stratifié (mélange carburé non-homogène présentant un taux de carburant inférieur à la stoechiométrie). Pour le traitement des oxydes d'azote (NOₓ), on connaît des technologies de réduction catalytique sélective, ou « SCR » selon un acronyme anglophone pour « Sélective Catalytic Réduction », qui consistent à réduire les NOₓ par introduction d'un agent réducteur (ou d'un précurseur d'un tel agent réducteur) dans les gaz d'échappement.

L'invention porte sur le domaine de l'introduction dans un conduit d'échappement d'un agent réducteur gazeux pour la SCR, typiquement de l'ammoniac (NH3), sous forme gazeuse.

Dans ce type de système, un conduit d'amenée du réducteur permet l'introduction de réducteur gazeux dans les gaz d'échappement circulant dans un conduit d'échappement du moteur à combustion équipé.

De manière classique dans ce type de système, l'introduction de NH₃ déjà à l'état gazeux dans l'échappement se fait au travers d'une canalisation souple en sortie d'un réservoir de stockage d'ammoniac et le long du soubassement du véhicule équipé, de façon à permettre un certain débattement entre la ligne d'échappement et la structure du véhicule, puis une portion de canalisation rigide raccordée au conduit d'échappement.

Un clapet anti-retour peut être inséré dans le conduit d'amenée du réducteur, par exemple dans la jonction entre la canalisation d'amenée d'ammoniac souple et le la portion de canalisation rigide d'échappement de façon à empêcher les gaz d'échappement de remonter dans la canalisation et l'encrasser par les suies ou autres sous composés lors des fluctuations de pression dans l'échappement et à l'arrêt du moteur. La remontée de l'échappement dans le tube NH₃ peut se produite lors d'un arrêt moteur (et la coupure d'injection NH₃) ou lors d'une augmentation importante de la pression échappement supérieure à celle du tube NH₃ comme cela se produit lors d'une phase transitoire de forte accélération, le temps que l'équilibre de pression soit réalisé.

En l'absence d'un tel clapet, on peut citer de manière non exhaustive et à titre d'exemple les composés chimiques suivants susceptibles de provoquer un encrassement de la canalisation, ayant notamment pour origine le mélange entre les gaz d'échappement et l'ammoniac :
● Bicarbonate d'ammonium (NH₄HCO₃) qui présente une température de fusion de 35 à 60°C;
● Nitrate d'ammonium (NH₄NO₃) qui présente une température de fusion de 170 °C ;
● Autres sous composés survenant de la réaction du NH₃ avec les gaz d'échappement (H₂O, CO₂, CO, NOₓ, etc.) ;
● Hydrocarbures et sous composés ;
● Particules, suies.

De manière générale, en présence de gaz d'échappement d'un moteur à combustion, plus la température est basse et plus le risque d'encrassement du conduit où sont présents les gaz d'échappement est important.

Par ailleurs, le clapet peut avantageusement être intégré à un raccord encliquetable formant la jonction entre la canalisation souple et la canalisation rigide, de sorte à éviter l'ajout d'une interface supplémentaire pour l'intégration du clapet.

Cependant, la mise en place du clapet anti-retour dans le raccord encliquetable présente l'inconvénient de nécessiter le respect de contraintes thermiques maximales, afin de préserver la tenue des joints d'étanchéité mis en jeu dans le raccord. Les joints d'étanchéités, notamment du type en caoutchouc, ne doivent pas dépasser une température de l'ordre de 110° C. Le réchauffement des joints est essentiellement dû au phénomène de conduction thermique, car le joint est en contact notamment autour de la portion de canalisation rigide d'amenée d'ammoniac dans le conduit d'échappement.

Afin d'assurer la tenue en température des joints, il est envisagé de maintenir une distance suffisante entre l'interface du tube métallique sur l'échappement chaud et le raccord encliquetable, c'est à dire de garantir une longueur suffisante à la portion de canalisation rigide de sorte que le raccord encliquetable et ses joints soit suffisamment éloigné du conduit d'échappement.

Par conséquent, le clapet anti-retour est aussi déporté et se retrouve à une distance non négligeable de l'interface à l'échappement (pouvant être typiquement supérieure à 20 cm). Une telle disposition est d'un premier point de vue avantageuse, car le risque d'encrasser le clapet diminue avec la longueur de portion de canalisation disposée entre le clapet et le conduit d'échappement, car un grand éloignement du clapet réduit la probabilité que des gaz d'échappement atteignent le clapet. Mais d'un autre point de vue, le risque d'encrassement de la portion de conduite située entre le clapet et le conduit d'échappement augmente car l'augmentation de sa longueur crée un volume mort entre le clapet et le conduit d'échappement dans lequel des gaz d'échappement peuvent s'introduire et refroidir (la température dans la conduite d'amenée d'ammoniac diminue le long de cette dernière d'autant plus qu'on s'éloigne du conduit d'échappement), ce qui empêche la fusion et l'élimination de dépôts éventuels.

L'invention tend à proposer un dispositif simple permettant d'éviter cet inconvénient.

Plus précisément, l'invention porte donc sur un dispositif d'alimentation d'un conduit d'échappement d'un moteur à combustion en réducteur gazeux pour la réduction catalytique sélective des oxydes d'azote comportant :
- une portion de conduit d'échappement;
- un conduit d'amenée d'un réducteur gazeux dans la portion de conduit d'échappement, lié par un piquage à ladite portion de conduit d'échappement ;
- un clapet anti-retour installé dans le conduit d'amenée et séparant le conduit d'amenée en une première portion de conduit d'amenée entre le piquage et ledit clapet compris, et une seconde portion de conduit d'amenée au-delà du clapet, le clapet étant orienté de sorte à éviter l'entrée de gaz d'échappement en provenance de la portion de conduit d'échappement dans la seconde portion de conduit d'amenée ;
dans lequel le dispositif comporte en outre un échangeur thermique du moteur à combustion, la première portion de conduit d'amenée étant fixée à l'échangeur thermique de sorte à assurer une conductivité thermique entre ladite première portion de conduit d'amenée et l'échangeur.
L'invention permet le réchauffement par conductivité thermique de la première portion du conduit d'amenée, pour en limiter l'encrassement. La liaison thermique avec un échangeur préexistant du moteur permet l'obtention d'un dispositif atteignant ce résultat pour un coût minime.

De préférence, la première portion de conduit d'amenée est fixée à l'échangeur au niveau du clapet. C'est en effet le clapet qui est le plus susceptible de connaitre une défaillance causée par son encrassement.

Dans une variante de l'invention, la première portion de conduit d'amenée est en contact direct avec l'échangeur. Cela permet d'avoir une bonne conductivité thermique entre les deux pièces, de manière simple.

De préférence, le conduit d'amenée est fixé à l'échangeur par au moins une agrafe métallique. L'agrafe offre ainsi la double fonction d'assurer une bonne conductivité thermique entre la surface de l'échangeur et la première portion de conduit, et d'assurer une fixation du conduit d'amenée ce qui limite les sollicitations mécaniques qu'il subit.

De préférence, l'échangeur thermique est du type dans lequel circule un liquide. Un tel échangeur présente moins de variations de température entre toutes les phases de fonctionnement du moteur équipé.

De préférence, l'échangeur est du type dans lequel circule du liquide d'un circuit de refroidissement du moteur. De manière préférentielle, l'échangeur est du type eau/huile formant une platine de support d'un filtre de l'huile de lubrification du moteur à combustion. Un tel échangeur présente une température constamment comprise entre 60°C et 110°C (hors phases de montée en température suite à un démarrage à froid du moteur), ce qui permet de limiter l'encrassement de la première portion de conduit d'amenée, tout en préservant les joints en caoutchouc du système d'une forte dégradation thermique.

De préférence, la première portion de conduit d'amenée comporte une conduite métallique rigide, et la seconde portion du conduit d'amenée est constituée d'une conduite souple. Cela permet une bonne conductivité thermique et une bonne stabilité de la première portion du conduit d'amenée, tout en offrant un certain débattement du conduit d'amenée pour son montage et sa résistance aux vibrations subies.

De préférence, clapet anti-retour est installé dans l'interface entre la portion de conduite métallique rigide et la conduite souple. Cela limite le nombre d'interfaces dans le dispositif, ce qui en améliore la fiabilité.

De préférence, l'interface comporte un raccord du type encliquetable. Ce type de raccord par clipage est simple à mettre en oeuvre.

De préférence, un réservoir d'ammoniac auquel est relié le conduit d'amenée de réducteur. En effet, l'introduction dans une ligne d'échappement d'ammoniac en tant que réducteur gazeux est l'application préférentielle du dispositif développé dans l'invention.

L'invention porte aussi sur un moteur à combustion comportant un conduit d'échappement équipé d'un dispositif conforme à l'invention, et sur un véhicule automobile comportant un tel moteur.

L'invention est décrite plus en détail ci-après et en référence aux figures représentant schématiquement le système dans son mode de réalisation préférentiel.

La figure 1 présente schématiquement le principe d'un dispositif d'introduction de réducteur gazeux dans un conduit d'échappement dans une variante envisagée dans l'état de la technique.

La figure 2 présente schématiquement une vue d'un détail de réalisation d'un dispositif d'introduction selon le principe présenté en figure 1.

La figure 3 présente schématiquement un dispositif conforme à un mode de réalisation de l'invention.

La figure 4 présente un exemple de liaison entre une portion de conduit d'amenée de réducteur gazeux et un échangeur telle qu'elle peut être employée dans l'invention.

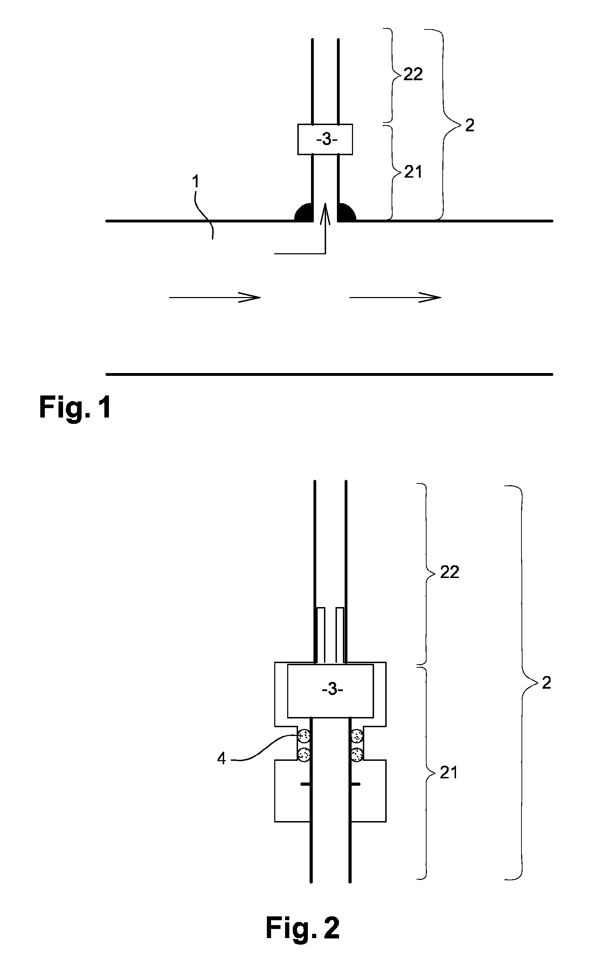

La figure 1 présente schématiquement le principe qui peut être mis en oeuvre pour l'introduction d'un réducteur gazeux dans un conduit d'échappement. Une portion de conduit d'échappement 1, dans laquelle circulent des gaz d'échappement en provenance d'un moteur à combustion, présente un piquage d'un conduit d'amenée 2 d'un réducteur gazeux. Le conduit d'amenée 2 peut être lié à la portion de conduit d'échappement 1 par exemple par soudage ou vissage dans un support adapté.

Le conduit d'amenée 2, tel que représenté dans l'exemple de la figure 1, comporte :
- une première portion de conduit d'amenée 21, comportant un tube métallique rigide et d'un clapet 3 anti-retour.
- une seconde portion de conduit d'amenée 22, pouvant être constitué d'un tube souple.

Le clapet 3 anti-retour marque la séparation entre la première portion de conduit d'amenée 21 et la seconde portion de conduite. Le clapet 3 est orienté de sorte à permettre le passage du réducteur gazeux vers la portion de conduit d'échappement 1, mais à empêcher la remontée de gaz d'échappement dans le conduit d'amenée 2 au-delà du clapet 3 anti-retour.

La figure 2 présente schématiquement la liaison entre la première portion de conduit d'amenée 21 et la second portion de conduit d'amenée 22. La liaison peut être réalisée à l'aide d'un raccord dit « encliquetable », qui s'emmanche dans la seconde portion de conduit d'amenée 22 et qui peu intégrer le clapet 3. Dans ce cadre, des joints d'étanchéité 4 sont interposés dans le raccord pour en garantir d'étanchéité vis-à-vis de la première portion de conduit d'amenée 21. Il peut s'agir de joints en caoutchouc sensibles thermiquement, de dégradant typiquement au-delà d'une température de 110°C.

Du fait de la tendance à l'encrassement du conduit d'amenée 2 et notamment du clapet 3 par les gaz d'échappement à faible température d'une part, et de la nécessité de maintenir le clapet et les joints d'étanchéité en dessous d'une température maximale acceptable d'autre part, il est proposé dans l'invention de favoriser la conduction entre la première portion de conduit et une pièce chaude du moteur dont la température est stabilisée entre 60°C et 110°C dans toutes les phases de vies (hors montée en température du moteur suite à un démarrage à froid).

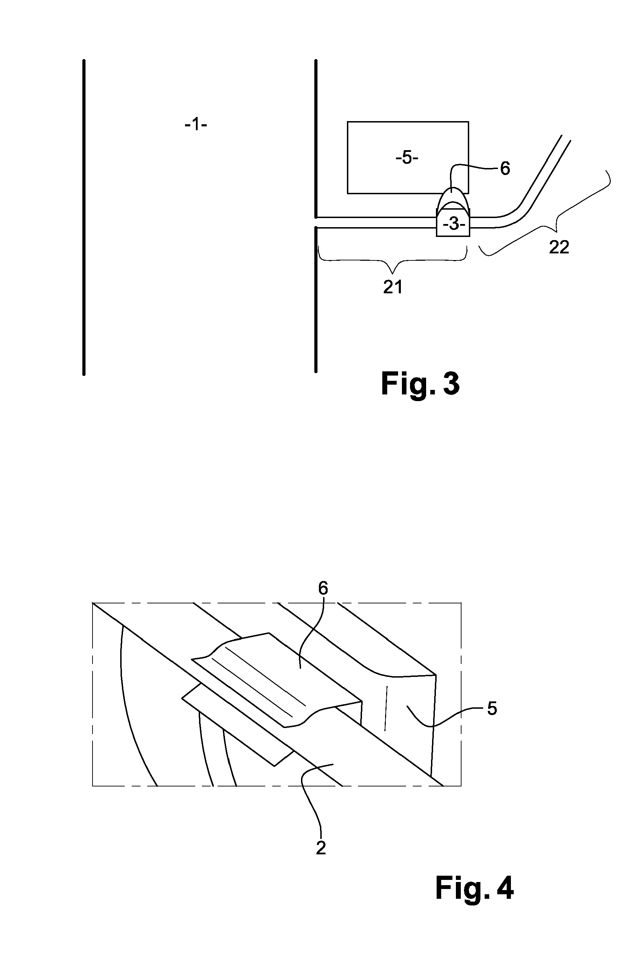

La figure 3 présente schématiquement le principe d'un dispositif conforme à un mode de réalisation de l'invention. L'invention est ici mise en oeuvre sur un dispositif d'introduction conforme à celui représenté en figure 1, comportant une portion de conduit d'échappement 1, un conduit d'amenée 2 de réducteur SCR gazeux, comportant une première portion de conduit d'amenée 21 métallique rigide, en bout de laquelle est disposé un clapet anti-retour 1, et une seconde portion de conduit d'amenée 22 souple, par exemple en matériau plastique.

Dans l'invention, la première portion de conduit d'amenée 21 (comportant le clapet 3) est fixée à un échangeur thermique 5 de sorte que la température de peau de l'échangeur soit transmise par conductivité à ladite première portion de conduit d'amenée 21. Il doit donc y avoir un contact physique, direct ou par l'intermédiaire d'une pièce bonne conductrice thermique, entre l'échangeur et la première portion de conduit d'amenée 21.

Le contact thermique entre l'échangeur et la première portion de conduit d'amenée 21 peut notamment être réalisé en fixant à l'échangeur la première portion de conduit, par exemple au niveau du clapet 3 anti-retour, à l'aide d'une ou plusieurs agrafes métalliques 6. On peut avantageusement employer des agrafes présentant une section « en omega ». Ce type d'agrafe et la fixation obtenue est représentée en figure 4.

En employant un dispositif de fixation conducteur (par exemple une ou plusieurs agrafes métalliques) entre l'échangeur et la première portion de conduit d'amenée 21 on réalise ainsi à l'aide d'un dispositif unique deux fonctions :
- d'une part le réchauffage et le maintien à une température apte à limiter l'encrassement de la première portion de conduit d'amenée 21, et notamment du clapet 3 anti-retour,
- d'autre part la fixation a proprement parler de la première portion de conduit d'amenée 21.

Il est également possible au besoin d'augmenter la conductivité thermique entre l'échangeur et la première portion de conduit d'amenée en multipliant les ponts thermiques entre ces deux pièces (ajout d'éléments conducteurs au contact des deux pièces), en employant des fixations ou autres pièces fortement conductrices, par exemple en cuivre, en interposant une pate thermique de contact, ou encore en cumulant plusieurs de ces possibilités.

L'idéal pour obtenir un dispositif simple et peu coûteux étant d'employer un échangeur préexistant dans le cadre d'une application automobile du dispositif, la demanderesse a évalué différentes solutions techniques. Un exemple de résultats menant aux variantes préférentielles de l'invention est présenté dans le tableau ci-après.

Le tableau suivant présente les températures en degrés celsius (° C) mesurées sur un moteur de véhicule automobile de type Diesel à 4 cylindres de 1,6L de cylindrée, pour différentes situations d'utilisation d'un véhicule automobile équipé d'un tel moteur :

| | **A** | **B** | **C** | **D** | **E** | **F** |
|---|---|---|---|---|---|---|
| Vitesse stabilisée à 80 km/h | 176 | 82 | 113 | 81 | 75 | 61 |
| Vitesse stabilisée à 150km/h | 250 | 98 | 98 | 84 | 80 | 68 |
| Régénération d'un filtre à particules ou vitesse stabilisée à 150 km/h | 340 | 89 | 113 | 88 | 84 | 73 |
| Accélération de 0 à 20 km/h | 150 | 97 | 113 | 98 | 94 | 84 |
| Ralenti en ville | 130 | 94 | 113 | 94 | 92 | 67 |
| Vitesse maximale stabilisée, environ 190km/h | 270 | 93 | 113 | 87 | 82 | 68 |
| Remorquage typique à 100 km/h | 340 | 103 | 114 | 104 | 98 | 86 |
| Remorquage typique en pente standardisée | 375 | 103 | 125 | 96 | 91 | 82 |

Avec :
A : Température en un point donné de la surface du conduit d'échappement ;
B : Température du liquide de refroidissement du moteur ;
C : Température de l'huile de lubrification du moteur ;
D : Température en surface de l'échangeur eau/huile (support du filtre à huile ou « modine ») en un 1 er point ;
E : Température en surface de l'échangeur eau/huile (support du filtre à huile ou « modine ») en un 2e point ;
F : Température de l'air à proximité immédiate de eau/huile (support du filtre à huile ou « modine »).

Le tableau précédent permet de constater que la température de peau du « modine » (échangeur eau/huile faisant support de filtre à huile) remplit dans toutes les situations de vie du véhicule analysée le critère de maintien d'une température entre 60° C et 110° C. L'échangeur employé dans l'invention sera donc préférentiellement le support de filtre à huile faisant échangeur, souvent désigné par le terme de « modine ».

Par exemple, on ne pourrait directement employer la température de peau du conduit d'échappement car cette dernière est soumise à des fluctuations importantes de température, et peut monter à des niveaux largement supérieurs à 110° C (maximum admissible pour un joint en caoutchouc), ce qui impose d'ailleurs l'éloignement du clapet anti-retour 3 du conduit d'échappement 1.

L'emploi dans l'invention du réchauffement de la portion de conduit en amont du clapet anti-retour ou du clapet lui-même par un la température de peau d'un échangeur thermique, préférentiellement du type « modine », et selon la variante de l'invention considérée, la fixation de ladite portion audit échangeur offre de multiple avantages :
- la limitation des défaillances du système d'introduction de réducteur gazeux par imitation de l'encrassement du système ;
- la mutualisation des fonctions de réchauffage et de fixation du conduit d'amenée de réducteur ;
- un gain économique car on emploi un échangeur préexistant, tandis que des solutions par ajout d'un dispositif de chauffage dédié serait onéreux ;
- une grande adaptabilité du système, notamment au climat dans lequel il est utilisé (augmentation de la conductivité thermique entre l'échangeur et le conduit d'amenée dans les climats froids, sélection d'une conductivité moindre pour les climats chauds) ;
- la possibilité de déporter le clapet anti-retour loin du conduit d'échappement.

## Revendications

1. Dispositif d'alimentation d'un conduit d'échappement d'un moteur à combustion en réducteur gazeux pour la réduction catalytique sélective des oxydes d'azote comportant :
- une portion de conduit d'échappement (1);
- un conduit d'amenée (2) d'un réducteur gazeux dans la portion de conduit d'échappement, lié par un piquage à ladite portion de conduit d'échappement ;
- un clapet (3) anti-retour installé dans le conduit d'amenée (2) et séparant le conduit d'amenée en une première portion de conduit d'amenée (21) entre le piquage et ledit clapet (3) compris, et une seconde portion de conduit d'amenée (22) au-delà du clapet (3), le clapet (3) étant orienté de sorte à éviter l'entrée de gaz d'échappement en provenance de la portion de conduit d'échappement (1) dans la seconde portion de conduit d'amenée (22) ;
**caractérisé en ce que** le dispositif comporte en outre un échangeur (5) thermique du moteur à combustion, la première portion de conduit d'amenée (21) étant fixée à l'échangeur thermique (5) de sorte à assurer une conductivité thermique entre ladite première portion de conduit d'amenée (21) et l'échangeur (5).

2. Dispositif selon la revendication 1, dans lequel la première portion de conduit d'amenée (21) est fixée à l'échangeur (5) au niveau du clapet (3).

3. Dispositif selon la revendication 1 ou la revendication 2, dans lequel la première portion de conduit d'amenée (21) est en contact direct avec l'échangeur (5).

4. Dispositif selon l'une quelconque des revendications précédentes, dans lequel le conduit d'amenée (2) est fixé à l'échangeur (5) par au moins une agrafe métallique (6).

5. Dispositif selon l'une des revendications précédentes, dans lequel l'échangeur (5) est du type dans lequel circule un liquide.

6. Dispositif selon la revendication 5, dans lequel l'échangeur (5) est du type dans lequel circule du liquide d'un circuit de refroidissement du moteur.

7. Dispositif selon la revendication 5 ou la revendication 6, dans lequel l'échangeur (5) est du type eau/huile formant une platine de support d'un filtre de l'huile de lubrification du moteur à combustion.

8. Dispositif selon l'une des revendications précédentes, dans lequel la première portion de conduit d'amenée (21) comporte une conduite métallique rigide, et la seconde portion du conduit d'amenée (22) est constituée d'une conduite souple.

9. Dispositif selon la revendication 8, dans lequel le clapet (3) anti-retour est installé dans l'interface entre la portion de conduite métallique rigide et la conduite souple.

10. Dispositif selon la revendication 9, dans lequel l'interface comporte un raccord du type encliquetable.

11. Dispositif selon l'une quelconque des revendications précédentes, comportant en outre un réservoir d'ammoniac auquel est relié le conduit d'amenée (2) de réducteur.

12. Moteur à combustion comportant un conduit d'échappement équipé d'un dispositif selon l'une des revendications précédentes.

13. Véhicule automobile comportant un moteur à combustion selon la revendication 12.
